# EUROPEAN PATENT APPLICATION

(11) **EP 3 301 833 A1**
(43) Date of publication of application: **04.04.2018**
(21) Application number: 16306243.3
(22) Date of filing: 28.09.2016
(51) Int. Cl.: H04B 17/26, H04B 17/391

(54) **RADIO FREQUENCY (RF) SENSING METHOD FOR DIAGNOSING AND ANTICIPATING RECEPTION PROBLEMS BASED ON FAILURE MODELING**

(71) Applicant: Thomson Licensing, 92130 Issy-les-Moulineaux (FR)
(72) Inventor: GILBERTON, Philippe, 35576 CESSON-SEVIGNE (FR); LOUZIR, Ali, 35576 CESSON-SEVIGNE (FR); HOWSON, Christopher, 35576 CESSON-SEVIGNE (FR); SACHOT, Jean-Claude, 35576 CESSON-SEVIGNE (FR)
(74) Representative: Huchet, Anne

(57) **Abstract**

A method and apparatus are described including monitoring and collecting radio frequency signal parameters over time, transmitting the collected radio frequency signal parameters to a cloud service and receiving a predicted failure notification from a service provider. Also described are a method and apparatus are described including receiving log files of RF signal parameters collected over a period of time, performing statistical analysis using the log files of RF signal parameters collected over a period of time, comparing results of the statistical analysis with given failure model built on performance measures, generating failure prediction and a time window of failure occurrence and forwarding the generated failure prediction and the time window of failure occurrence to the service provider.

## Description

### FIELD OF THE INVENTION

The proposed method and apparatus relates to the diagnosis and anticipation of signal reception problems

### BACKGROUND OF THE INVENTION

This section is intended to introduce the reader to various aspects of art, which may be related to the present embodiments that are described below. This discussion is believed to be helpful in providing the reader with background information to facilitate a better understanding of the various aspects of the present disclosure. Accordingly, it should be understood that these statements are to be read in this light.

In multicast and broadcast applications, data are transmitted from a server to multiple receivers over wired and/or wireless networks. A multicast system as used herein is a system in which a server transmits the same data to multiple receivers simultaneously, where the receivers form a subset of all the receivers up to and including all of the receivers. A broadcast system is a system in which a server transmits the same data to all of the receivers simultaneously. That is, a multicast system by definition can include a broadcast system.

Reception problems may arise for satellite service providers, cable service providers, terrestrial (broadcast) service providers and/or internet service providers.

Diagnosing reception problems is not an easy task. Reception problems can impact dramatically the quality of experience of the end user and the service provider business revenue as well. Any solution that could anticipate the reception failure of a connected box is a valuable response both for the service provider and the end user.

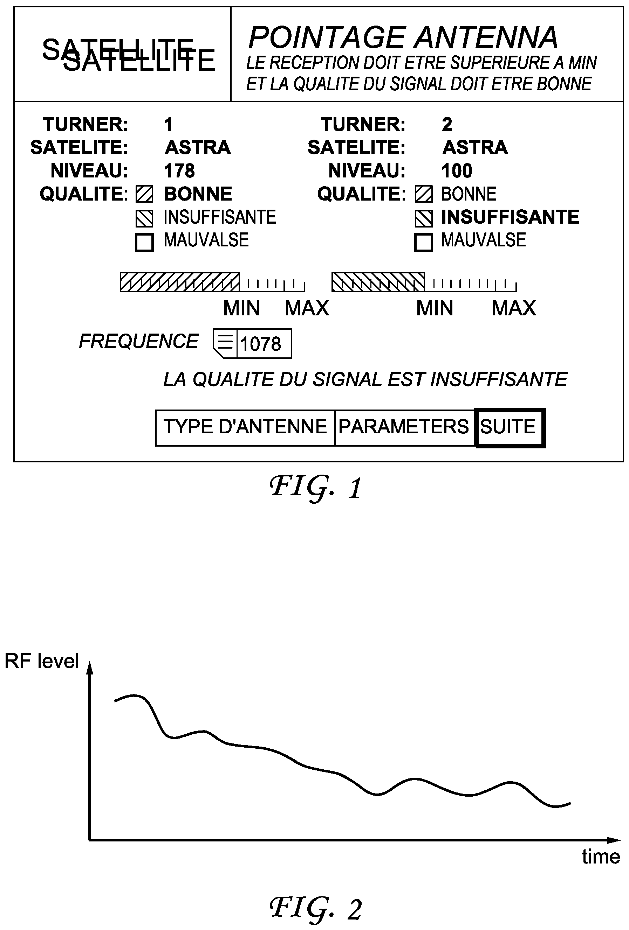

Fig. 1 shows an exemplary dashboard available from a satellite set-top box User Interface. The dashboard indicates that there is a satellite antenna de-pointing problem but the origin of such problem can be any one or more of multiple causes (weather conditions, cable disconnection, dust on the antenna, depolarization, de-pointing, ...). This dashboard represents only the impact of the current failure occurring. Unfortunately the indications of the dashboard are too little notification is too late from the end user experience point of view. There is currently no known method to anticipate such a problem and ultimately to avoid the occurrence of such a problem.

In a satellite reception situation, the end user usually has access to very few parameters but nothing really exists to diagnose and anticipate the potential origin of degradation that occur over time. It would be advantageous to have a means and method to diagnose reception problems and even better to have a means and method to anticipate such reception problems.

### SUMMARY OF THE INVENTION

Satellite service providers and satellite reception problems are used as an example herein to describe the invention but the proposed method and apparatus is not limited to satellite reception problems. The proposed method and apparatus described herein refers to satellite reception - the same or similar technology can be used for broadcast terrestrial reception installations or cable distribution systems - some of the failure causes may differ but implementation principles and service to end user are the same. The proposed method and apparatus is applicable to set-top boxes as well as to connected TVs (aka smart TVs).

The proposed method and apparatus provides the end user and the satellite service provider a method to diagnose and anticipate the potential (possible) reception issues based on regular data collection of satellite receiver parameters and on matching them to failure models, which are built on performance measures. When the satellite receiving device, such as a set top box (STB) or gateway, is connected to a communication means (e.g., to an Internet Protocol network), it is possible to analyze the parameters' fluctuations over time and also over many subscribers which will give a significantly more accurate diagnosis, for example if it is an individual or a network-wide or regional failure. A regional failure may be, for example, over the eastern United States but not over the entire country. It depends on if a single satellite services the entire country or the country is split into regions serviced by multiple satellites. As another example, it is unlikely that Alaska and Hawaii are serviced by the same satellite that service Maine or Florida. The regular data analysis performed remotely allows the satellite service provider to give its subscriber a more relevant recommendation on potential and/or predicted failure occurrence and to better organize, for example its satellite service maintenance planning. A typical satellite receiver parameter degradation is reflected in the curve of Fig. 2 which shows for example a declining satellite signal received RF level over time.

Advantages of the proposed method and apparatus are better satellite receiver failure anticipation that results in a cost maintenance reduction for the satellite service provider as well as better user experience. The proposed method and apparatus can more accurately diagnose potential upcoming satellite reception problems and give the subscriber a relevant feedback on the failure origination with an optional appropriate advice on how to mitigate the failure occurrence.

A first aspect provides a method including monitoring and collecting radio frequency signal parameters over time, transmitting the collected radio frequency signal parameters to a cloud service and receiving a predicted failure notification based on the collected radio frequency signal parameters from a service provider.

In an embodiment, the received predicted failure notification is forwarded to a subscriber's display device.

In another embodiment, the transmitting is performed periodically or as a result of being polled by the cloud service.

In another embodiment, the radio frequency signal parameters include any one or more of bit error rate, received signal strength indication, signal-to-noise ratio, channel frequency, phase locked loop, and voltage.

A second aspect provides a receiving device including one or more processors operable to monitor and collect radio frequency signal parameters over time, transmit said collected radio frequency signal parameters to a cloud service; and receive a predicted failure notification based on the collected radio frequency signal parameters from a service provider. The receiving device may be a set top box or home gateway device.

In an embodiment the processor is further operable to forward the received predicted failure notification to a subscriber's display device.

In another embodiment the transmitting is performed periodically or as a result of being polled by the cloud service.

In another embodiment the radio frequency signal parameters include any one or more of bit error rate, received signal strength indication, signal-to-noise ratio, channel frequency, phase locked loop, and voltage.

A third aspect provides a method including receiving aggregated RF signal parameters collected over a period of time, performing statistical analysis using the aggregated RF signal parameters collected over the period of time, comparing results of the statistical analysis with given failure model built on performance measures, generating failure prediction and a time window of failure occurrence based on the comparison and forwarding the generated failure prediction and the time window of failure occurrence to the service provider. The RF signals may be received as log files.

In an embodiment, weather information is received and the statistical analysis is performed using the received weather information.

In another embodiment, the receiving is accomplished by polling a subscriber's receiving device (set top box or gateway).

A fourth aspect provides a cloud service including one or more processors operable to: perform statistical analysis using aggregated RF signal parameters collected over a period of time; compare results of the statistical analysis with given failure model built on performance measures, generate failure prediction and a time window of failure occurrence and forward the generated failure prediction and the time window of failure occurrence to a service provider.

In an embodiment, the receiving of the parameters is accomplished by polling a subscriber's receiving device (set top box or gateway).

In another embodiment, the statistical analysis includes regression analysis or correlation analysis.

In another embodiment, the processor is further operable to receive weather information and perform the statistical analysis also using the weather information.

In another embodiment, the failure prediction includes failure predictions for any one or more of cable connection degradation, antenna de-pointing degradation, depolarization and LNB depolarization.

A fifth aspect provides a method including receiving a predicted failure type and a time window associated with the predicted failure, forwarding the predicted failure type and associated time window as a notifications to a subscriber and forwarding the predicted failure type and associated time window to a schedule service.

In an embodiment, the scheduled service includes one or more of maintenance, repairs and equipment replacement.

In another embodiment, if the predicted failure is network-wide or regional, then the service provider schedules the service.

In another embodiment if the predicted failure is for an individual subscriber then the service is coordinated with a subscriber.

A sixth aspect provides a service provider including one or more processors operable to receive a predicted failure type and a time window associated with the predicted failure; forward the predicted failure type and associated time window as a notification to a subscriber; and forward the predicted failure type and associated time window to a schedule service.

In an embodiment the scheduled service includes one or more of maintenance, repairs and equipment replacement.

In another embodiment if the predicted failure is network-wide or regional, then the service provider schedules the service.

In another embodiment if the predicted failure is for an individual subscriber then the service is coordinated with a subscriber.

### BRIEF DESCRIPTION OF THE DRAWINGS

The present invention is best understood from the following detailed description when read in conjunction with the accompanying drawings. The drawings include the following figures briefly described below:
Fig. 1 shows an exemplary dashboard of satellite reception parameters.
Fig. 2 shows exemplary RF level signal declination (degradation) over time.
Fig. 3 is a block diagram of the proposed apparatus to diagnose and anticipate reception problems.
Fig. 4 shows exemplary Sr attenuation (current and initial) versus channelization with cable failure/attrition.
Fig. 5 shows an exemplary cable connection degradation prediction model per channel.
Fig. 6 shows exemplary Sᵣ attenuation (current and initial) versus channelization with antenna de-pointing impact.
Fig. 7 shows exemplary antenna de-pointing prediction model averaged over all channels.
Fig. 8 shows exemplary SNR (current and initial) versus channelization with LNB depolarization effect over time.
Fig. 9 shows exemplary SNR with no depolarization.
Fig. 10 shows exemplary SNR attenuation with depolarization.
Fig. 11 shows exemplary LNB depolarization prediction model averaged over all channels.
Fig. 12 is a flowchart of an exemplary embodiment of the receiver in accordance with the principles of the present invention.
Fig. 13 is a flowchart of an exemplary embodiment of the cloud service in accordance with the principles of the present invention.
Fig. 14 is a flowchart of an exemplary embodiment of the service provider in accordance with the principles of the present invention.
Fig. 15 is an example block diagram of an exemplary receiving device (home networking device, media device) 1500 such as, but not limited to, a set top box.
Fig. 16 is an exemplary embodiment of a cloud computing architecture.
Fig. 17 is an exemplary embodiment of a television service provider's facility 1700.

It should be understood that the drawings are for purposes of illustrating the concepts of the disclosure and is not necessarily the only possible configuration for illustrating the disclosure.

### DETAILED DESCRIPTION OF THE PREFERRED EMBODIMENTS

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

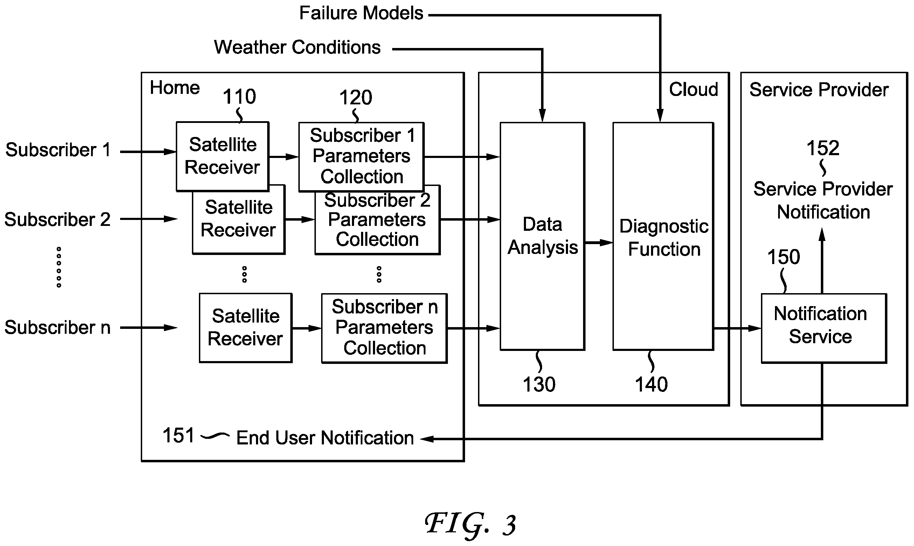

Fig. 3 is a block diagram of the proposed apparatus to diagnose and anticipate reception problems. Block 110 of Fig. 3 represents the satellite receiver itself equipping the satellite receiving device (set top box, gateway, media device). The satellite receiver includes at least one tuner from which dedicated RF parameters can be extracted such as but not limited to BER (Bit Error Rate), RF received signal level, SNR (Signal to Noise Ratio), channel frequency, phase locked loop voltage, etc. Block 110 is on the home side of the subscriber 1 but it has to be imagined that it is true for each subscriber and is replicated up to subscriber number n.

Block 120 of the proposed system performs the satellite RF parameters collection of subscriber 1 and aggregates the information for the collected RF parameters over time. Block 120 of the satellite receiver delivers the aggregated collected satellite RF parameters as a log file to the block 130. In the same way as block 110, there is a block 120 for each subscriber and is, therefore, replicated up to subscriber number n. Satellite RF parameters (or more generally signal parameters) may include parameters such as carrier level, carrier to noise ratio (CNR), bit-error rate, received frequency, polarity and band (for satellite), packet count etc.

Block 130 of the proposed system performs, through a cloud service infrastructure, the statistical analysis (like histogram, standard deviation, average) based on all of the subscribers' log files delivered to block 130 by block 120. Block 130 will also collect weather information to add relevant weather conditions over a timeline superimposed on the subscriber parameters in order to determine if there is any failure correlation.

Block 140 of the proposed system performs, based on statistical analysis provided by block 130, the diagnostic (based, for example, on regression algorithms) comparing the current statistical data with statistical data stored during the setup of the satellite reception parameters provided by the satellite service provider. More particularly, block 140 compares the specific RF parameters evolution over time and optionally weather information with failure models, which are built on performance measures.

Sample failure models that are stored in a database and built, for example, on prior subscriber's history failures and/or performance measures. A metric, for example, a correlation value could be used to express the similarity factor between the current statistical values and the stored statistical values corresponding to failure models (cable failure, antenna depolarization, LNB de-pointing, dust on reception antenna, etc...). When the failure matching is performed it provides the failure type and delivers to the service provider its prediction possibly with a time window of occurrence.

Block 150 of the system receives the prediction result from block 140. The notification service builds and sends two types of notifications: one for the service provider (152) to help the action plan and one for the subscriber (151). The subscriber notification could be transmitted through the subscriber's cellular network (as an example of notification, the subscriber could receive a short message service (SMS) text message like "Please check your antenna, an antenna de-pointing issue is occurring", another notification could use a push-notification mechanism through an application installed on smartphone or tablet or via the communication means (connection to IP network) used for transmission of the RF signal parameters) and simultaneously on the subscriber's TV screen to maximize the chance reaching the subscriber.. The service provider notification 152 will help the satellite service provider to geo-localize predicted upcoming failures and let the service provider better plan the repair service.

Hereafter is a more detailed description of how to discriminate cable connection failure/attrition from antenna de-pointing and low noise block (LNB) downconverter depolarization. The assumption is that the satellite receiver disposes of at least two tuners allowing for the block 110 to have access to the RF received signal (Sᵣ) and its Signal to Noise ratio (SNR) for each individual channel. The satellite service provider transmits the signal on horizontal (H) and vertical (V) polarization alternatively (channel 1 is H, channel 2 is V, etc...)

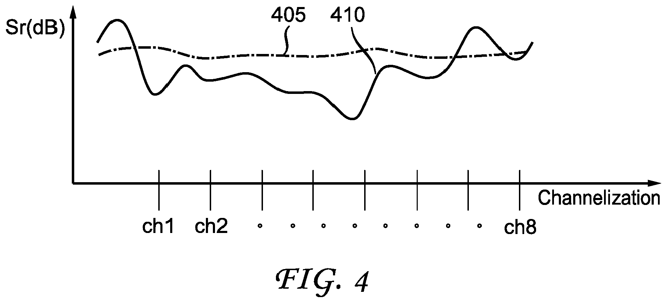

In the case of cable connection degradation the Sᵣ will be attenuated but not uniformly on the frequency spectrum. Fig. 4 shows exemplary Sᵣ attenuation (current curve 410 and initial curve 405) versus channelization with cable failure/attrition. Fig. 4 shows that in detecting the Sᵣ per channel statistic over time is not homogenous compared to the initial one performed at the setup of the satellite installation, a cable failure is occurring and should be controlled, replaced or repaired. Concurrently to this fact the SNR per channel would have decreased too.

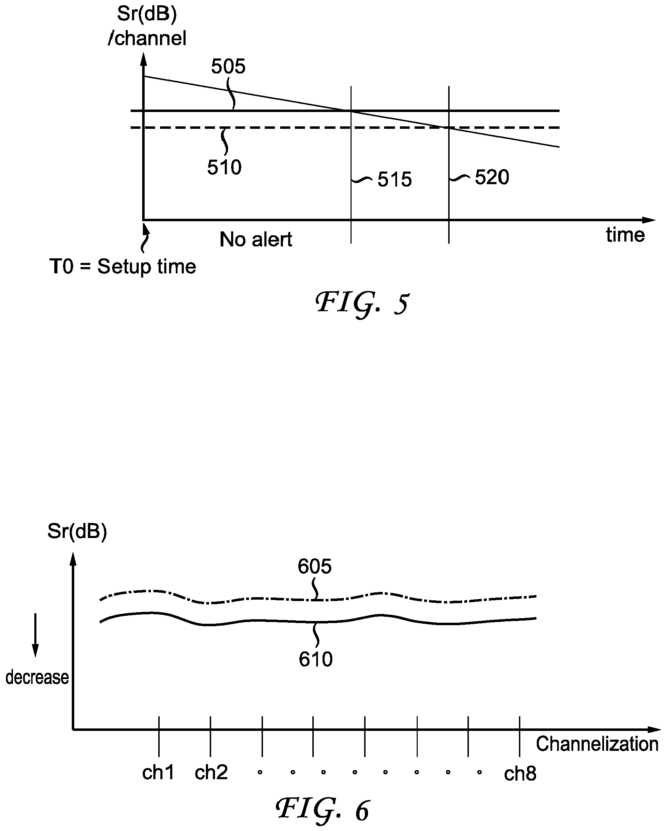

Fig. 5 shows an exemplary cable connection degradation prediction model per channel that will be used for anticipating such failure occurrence. Threshold 1 (505) corresponds to the Sᵣ level per channel under which an alert (515) is generated. In this case only one channel Sᵣ degradation is enough to consider cable connection problem. Threshold 2 (510) is the predicted date of occurrence of the failure (520) under which a subscriber will get significant degradation of quality of service. The intersection of line representing the cable connection degradation prediction model with threshold 1 results in an alert notification. The intersection of the line representing the cable connection degradation prediction model with threshold 2 gives a predictable date of failure occurrence.

Fig. 6 shows exemplary Sᵣ attenuation (current curve 610 and initial curve 605) versus channelization with antenna de-pointing impact. In the particular case of antenna de-pointing the Sᵣ will be attenuated uniformly all along the channelization spectrum. In performing the same statistical analysis over time on all channels, it would be estimated that a homogeneous attenuation is occurring and the cable between the LNB downconverter and the satellite receiver needs to check the antenna pointing parameter. Concurrently the SNR per channel would have decrease as well.

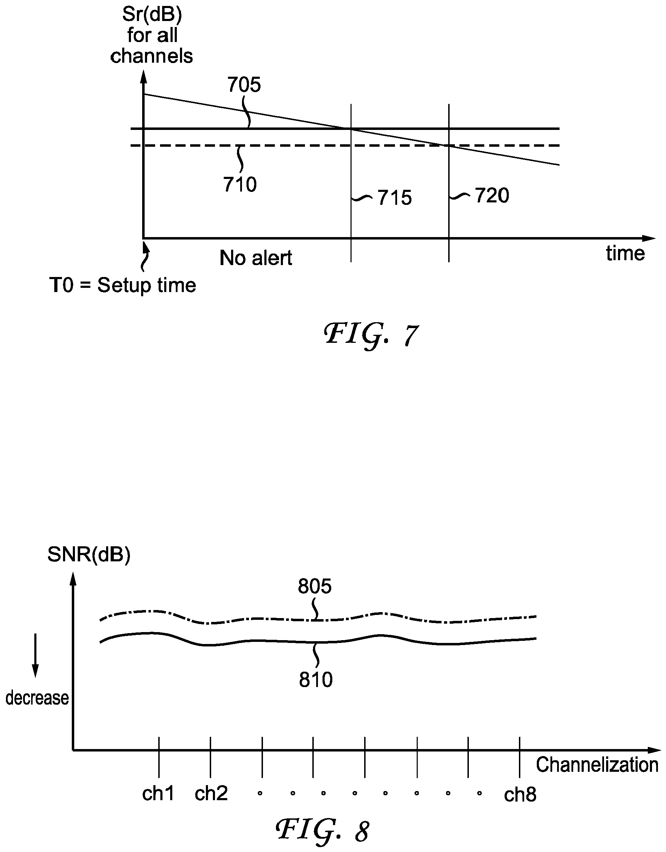

Fig. 7 shows exemplary antenna de-pointing degradation prediction model averaged over all channels that will be used for anticipating such failure occurrence. Threshold 1 (705) corresponds to the Sᵣ level averaged for all channels under which an alert 715 is generated. In this case the Sᵣ degradation homogeneity on all channels is considered to detect such failure. Threshold 2 (710) is the predicted date of occurrence of the failure 720 under which a subscriber will perceive significant degradation of quality of service. The intersection of line representing the cable connection degradation prediction model with threshold 1 results in an alert notification. The intersection of the line representing the cable connection degradation prediction model with threshold 2 gives a predictable date of failure occurrence.

In the case this failure model is occurring for more than one subscriber in the same time window, this means that the failure is network-wide or regional and not individual. A network-wide or regional failure is a different failure origination such as weather conditions, satellite orbital sliding due to aging phenomenon etc. This is handled in block 150 by the satellite service provider. The satellite service provider will send a different subscriber alert (notification) depending on the individual or network-wide or regional failure impact. In the individual case, the concerned subscriber will receive a message like "Please check your reception antenna/our customer service, performances are degrading". In the network-wide or regional service degradation or failure each affected subscriber will receive a message such as "You are experiencing a network-wide or regional service degradation, the service will be fully restored in xx minutes" or "You are experiencing a network-wide or regional service degradation due to bad weather condition, the service will be fully operational shortly".

Fig. 8 shows exemplary SNR (current curve 810 and initial curve 805) versus channelization with LNB downconverter depolarization effect over time. In the case of LNB downconverter depolarization, the SNR will be analyzed in particular due to depolarization impact. Each channel has a specific polarization for example horizontal (H) for the first one and vertical (V) for second one and so on. It means that a LNB downconverter depolarization will affect both the current H channel received signal strength (due to the co-polarization loss) but also its SNR as the adjacent V channels will leak on the current H channel (due to the cross-polarization rise of the antenna system). Typically a depolarization of an angle of θ induces a signal loss factor of cos θ and an additive noise from both X-polarized adjacent channels equal to the sum of each adjacent channel level multiplied by cos θ. Thus, this depolarization phenomenon, has a double effect, of received signal attenuation and increased noise. This will be repeated on all channels in the same ratio.

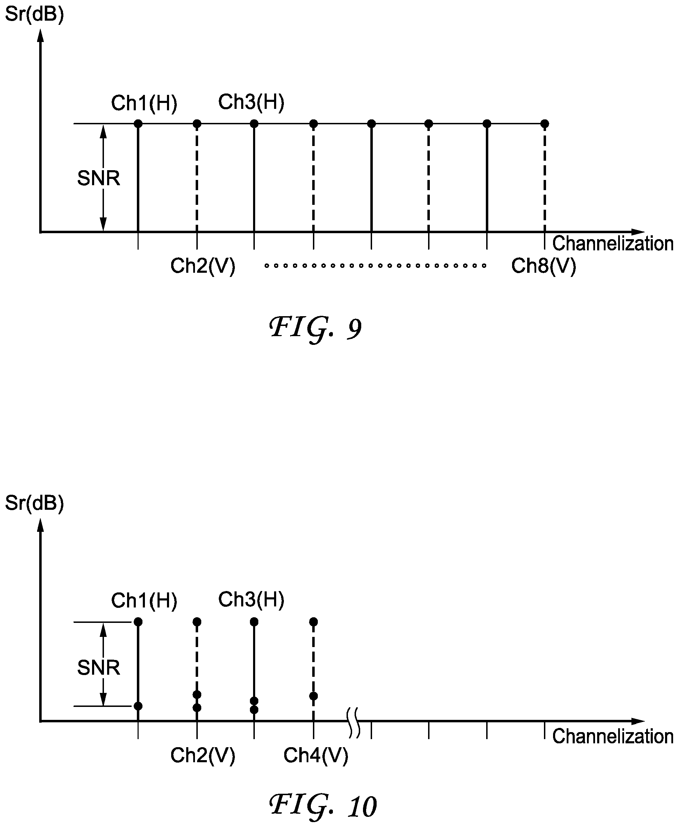

Fig. 9 shows the ideal case where no depolarization occurs because each channel is orthogonal to each other due to the H/V polarization property. Fig. 10 presents the depolarization impact on SNR. The SNR value decreases according to depolarization ratio/angle (LNB downconverter has rotated for fixed amount of degrees over time due to fixation problem, strong wind, etc.). For clarity of the Fig. 10 the depolarization effect is limited to 4 channels and to n+1 and n-1 adjacent channels leakage. In fact two parameters of each channel are impacted - the channel Sᵣ decreases and its SNR as well because some leakage of the adjacent channels occurs. This can be generalized to all channels. Additionally, the SNR decreasing value could give some indication on the rotation angle of the LNB downconverter.

In performing a statistical analysis on the SNR over time for each channel and in proving that its decline is strongly correlated over time and over all the channels, it will show up that a depolarization is occurring and that it needs a LNB downconverter/parabola positioning control.

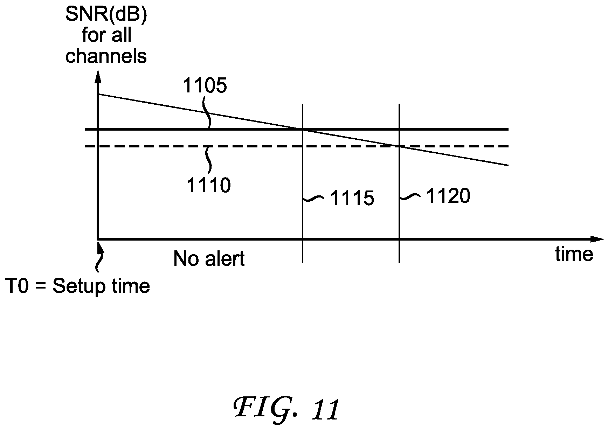

Fig. 11 shows exemplary LNB depolarization prediction model averaged over all channels that will be used for anticipating such failure occurrence. Threshold 1 (1105) corresponds to the SNR level averaged over all channels under which an alert (1115) is generated. In this case the SNR degradation homogeneity on all channels is considered to detect such failure. Threshold 2 (1110) is the predicted date of occurrence of the failure (1120) under which a subscriber will get significant degradation of quality of service. The intersection of line representing the cable connection degradation prediction model with threshold 1 results in an alert notification. The intersection of the line representing the cable connection degradation prediction model with threshold 2 gives a predictable date of failure occurrence.

In the case where this failure model is occurring for more than one subscriber in the same time window, it means that the failure is network-wide or regional and not individual. In the case of a network-wide or regional failure a different failure origination such as satellite mis-orientation due to aging phenomenon, is the cause. This is handled in block 150 by the satellite service provider. The service provider will send a different subscriber notification, depending on the individual or collective failure impact. In the individual case, the concerned subscriber will receive a message like "Please check your reception antenna/our customer service, performances are degrading". In the network-wide or regional failure degradation situation, each concerned subscriber will receive a message like "You are experiencing a network-wide or regional degradation, the service will be fully restored in xx minutes" or "You are experiencing a network-wide or regional degradation due to bad weather conditions, the service will be fully operational shortly".

The above four examples describe four failure models reflecting satellite receiver degradation over time that constitute the database necessary for diagnostic purposes performed in block 140.

If Sᵣ and SNR attenuation occur punctually and abruptly, for example, during meteorological event like heavy rain, ice, snow it can be eliminated easily from the data analysis in introducing the temporal notion of short or slow RF parameters degradation. Examples of recommendations to users for detected reception issues are:

If the failure is individual (for a single subscriber) then the failure may be caused by cable connection degradation, antenna de-pointing, depolarization, channel stacker failure or LNB downconverter switching. If the failure is caused by cable connection degradation then the solution may be to tighten the LNB downconverter and STB connectors, clean the connectors, check the outdoor connectors for humidity and dry and reseal the outdoor connectors. If the failure is caused by antenna de-pointing then the solution may be to check and re-align the antenna, check and re-tighten the LNB downconverter mountings. If the failure is caused by depolarization then the solution may be to check and re-align the LNB downconverter mounting and orientation.

If the failure is network-wide or regional then the failure may be caused by bad weather conditions, satellite service provider failure, channel stacker malfunction, LNB downconverter band/polarity selection or line amplifier.

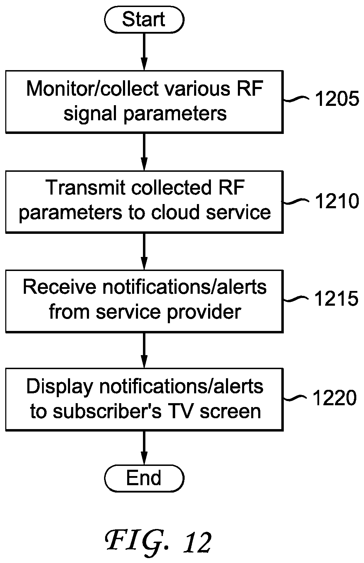

Fig. 12 is a flowchart of an exemplary embodiment of the receiver in accordance with the principles of the present invention. As shown in Fig. 3 the satellite receiver and parameter collection function are installed in the subscriber's premises. The parameter collection function may be in the STB or in a gateway connected to the STB. It would be preferable to have the parameter collection in the STB, which has the receiver within it.

In addition to the operations/functions that the STB performs for the proposed method, the STB receives an RF signal supplied by the service provider through a satellite system, cable system or terrestrial broadcast system. The RF signal may be audio, video, multimedia or any other signal having content able to be rendered on a display device such as a TV, computer monitor, smart phone, tablet or the like. The STB performs any or all of the following functions/operations including (but not limited to only the following operations/functions) decryption, decoding, transcoding, error correction and error concealment. The STB also forwards the received content to a display device.

At 1205 the STB monitors and collects various RF signal parameters over time including but not limited to bit error rate (BER), received signal strength indication (RSSI), SNR, channel frequency, phase locked loop, and voltage. At 1210, the STB transmits the collected RF signal parameters to the cloud service. The transmission of the collected RF signal parameters may be performed periodically under the control of a clock or may be accomplished as a result of being polled by the cloud service. At 1215 the STB receives failure notifications/alerts from the service provider (satellite, cable, broadcast). At 1220 the STB forwards the predicted failure notification/alert to a subscriber's display device for display or popup shown on TV screen, with message received from the service provider via the IP link that is also required for parameter collection.

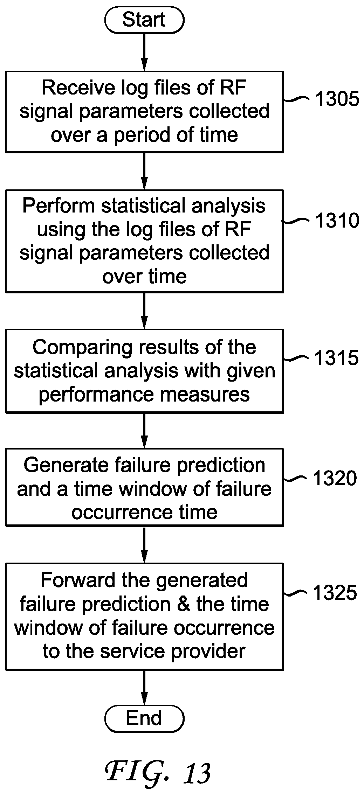

Fig. 13 is a flowchart of an exemplary embodiment of the cloud service in accordance with the principles of the present invention. At 1305 the cloud service at data analysis function 130 receives the log files of RF signal parameters collected over time from each of the subscribers in the service providers' system. The log files may be transmitted periodically based on a schedule or the cloud service may poll the subscribers in order to receive the log files of the RF signal parameters collected by the STB over time. The data analysis function 130 also may receive information about weather conditions. At 1310 the data analysis function 130 performs statistical analysis using the log files of the RF signal parameters collected over time. The statistical analysis may be performed also using the weather information. Statistical analysis may include but is not limited histograms, average and standard deviation. The data analysis function 130 forwards the RF signal analysis parameters and the statistical analysis to the diagnosis function 140, which compares the RF signal parameters collected over time and statistical analysis with failure models built on performance measures at 1315. The comparison may include executing of regression or correlation algorithms. The comparison also includes matching the statistical analysis values obtained using the RF signal parameters against stored failure models. The failure models are built on performance measures. The diagnosis function 140 generates any failure predictions and a time window of the failure prediction based on the received RF signal parameters collected over time and the statistical analysis at 1320. At 1325 the cloud service forwards the generated failure prediction and time window of the failure prediction to the service provider.

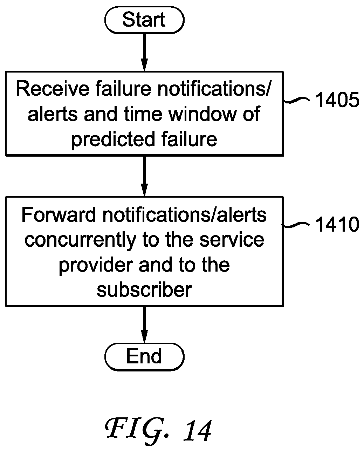

Fig. 14 is a flowchart of an exemplary embodiment of the service provider in accordance with the principles of the present invention. At 1405, the service provider receives in its notification service any predicted failure notifications/alerts and the associated time window of any failure prediction. At 1410, the notification service located in the service provider premises forwards the predicted failure notifications/alerts and associated time window for the predicted failure notifications/alerts to the service provider to schedule maintenance/repairs/equipment replacement and to the STB at the subscriber premises. If the identified predicted failure is network-wide or regional the service provider schedules the maintenance/repair/replacement of the equipment that is not within the subscriber's premises. If, however, the failure is for an individual subscriber then the maintenance/repair/replacement is coordinated with the subscriber either by phone, email or text message.

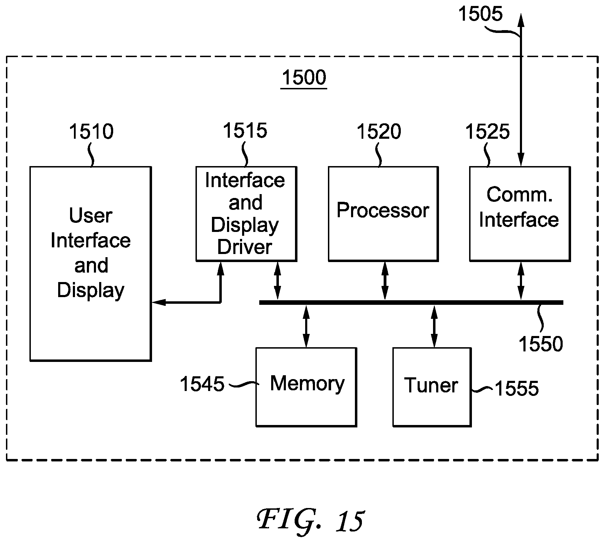

Fig. 15 is an example block diagram of an exemplary receiving device (home networking device, media device) 1500 such as, but not limited to, a set top box. The block diagram configuration includes a bus-oriented 1550 configuration interconnecting a processor 1520, and a memory 1545. The configuration of Fig. 15 also includes a communication interface 1525. The communication interface 1525 may be wired or wireless and may in fact, include two interfaces - one for wired line communication and one for wireless communication.

Processor 1520 provides computation functions for a receiving device (set top box, gateway, media device), such as those depicted in Fig. 12 as well as conventional receiving device (set top box, media device, gateway) functionality. The processor 1520 can be any form of CPU or controller that utilizes communications between elements of the receiving device (set top box, gateway, media device) to control communication and computation processes. Those of skill in the art recognize that bus 1550 provides a communication path between the various elements of embodiment 1500 and that other point-to-point interconnection options (e.g. non-bus architecture) are also feasible.

User interface and display 1510 is driven by interface circuit 1515. The user interface and display 1510 is used as a multimedia interface having both audio and video capability to display streamed or downloaded audio and/or video and/or multimedia content obtained via network interface 1525 and connection 1505 to a network.

Tuner 1555 includes not only a tuner (e.g., satellite receiver) but also a demodulator and other features relevant for the purpose of the proposed method, such as packet error detector and other RF signal reception parameters, such as carrier level, carrier to noise ratio (CNR), bit-error rate, received frequency, polarity and band (for satellite), packet count etc.

Any or all of the functionality included in the receiving device (set top box, gateway, media device) may be embodied as application specific integrated circuits (ASICs), field programmable gate arrays (FPGAs), reduced instruction set computers (RISCs) or any other equivalent separate type of co-processor integrated into processor 1520.

Memory 1545 can act as a repository for memory related to any of the methods that incorporate the functionality of the receiving device (set top box, gateway, media device). Memory 1545 can provide the repository for storage of information such as program memory, downloads, uploads, or scratchpad calculations as well as the storage of streamed or downloaded content including audio, video and multimedia content. Those of skill in the art will recognize that memory 1545 may be incorporated all or in part of processor 1520. Communication interface 1525 has both receiver and transmitter elements for communication as known to those of skill in the art. Program instructions for operation of the processor of the receiving device (set top box, gateway, media device) may be in memory 1545 or may be in the processor.

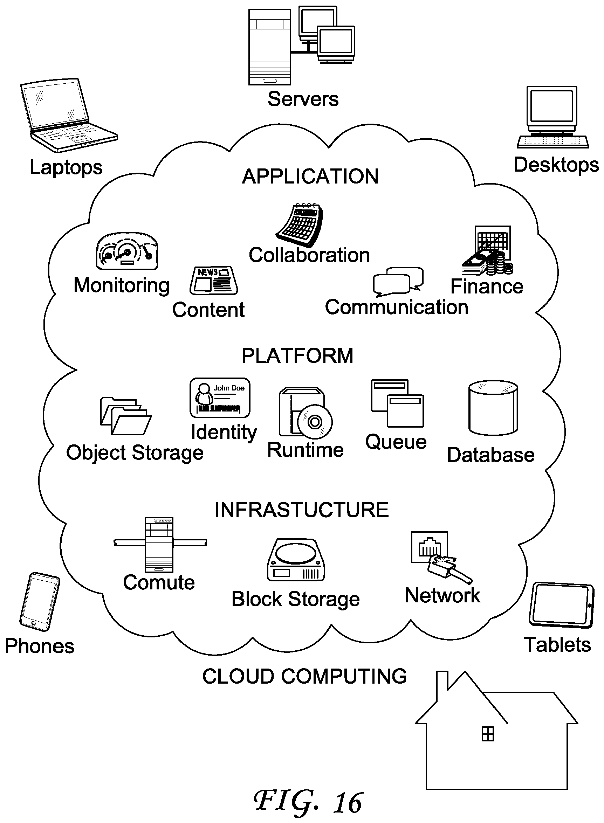

Fig. 16 is an exemplary embodiment of a cloud computing architecture. Cloud computing is a form of Internet-based computing that provides shared processing resources and data and other devices on demand. The cloud computing model enables ubiquitous on-demand access to a shared pool of configurable computing resources. In general, the resources can be rapidly provisioned and released with very little management effort. The shared resources provide users and enterprises with capabilities to process their data by third parties and the associated data centers of the third parties. In terms of the proposed solution, the cloud service (could be cloud computing service) would receive the log files of the signal parameters and weather information from a receiving device (set top box, gateway, media device) (through the communications interface as described above) in a subscriber's home through a network connection in the cloud service. Data analysis function 130 and diagnosis function 140 would be performed by the "compute" function (processor or processors) within the cloud computing architecture. That is, "compute" function (processor or processors) provide computation functions for the cloud service such as those depicted in Fig. 13 as well as conventional cloud service computing functionality.

Television service providers (service providers) including broadcast television service providers, cable television service providers and satellite television service providers, provide content (audio, video and multimedia) to subscribers through receiving devices (set top boxes, gateways, media devices). As used herein a receiving device (set top box, gateway, media device) includes a tuner, which includes a cable or satellite receiver, demodulator, decryption module, conditional access module etc.

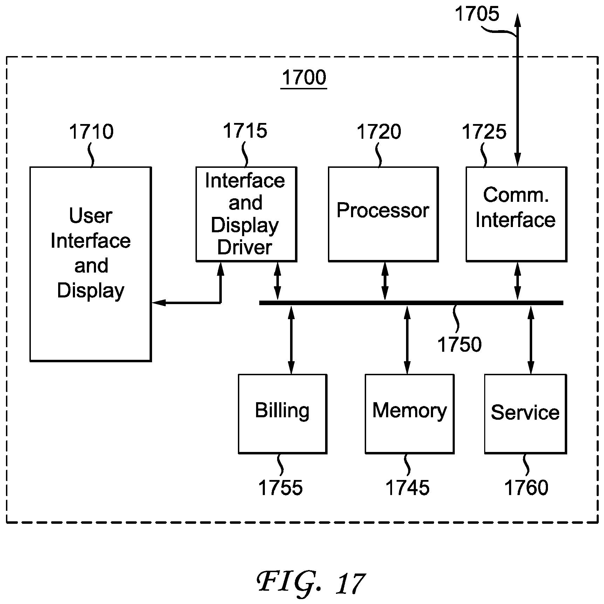

Fig. 17 is an exemplary embodiment of a television service provider's facility 1700. The block diagram configuration includes a bus-oriented 1750 configuration interconnecting a processor 1720, and a memory 1745. The configuration of Fig. 17 also includes a communication interface 1725. The communication interface 1725 may be wired or wireless and may in fact, include two interfaces - one for wired line communication and one for wireless communication.

Processor 1720 is probably actually multiple processors and provides computation functions for the service provider such as those depicted in Fig. 14 as well as conventional service provider functionality. The processor(s) 1720 can be any form of CPU or controller that utilizes communications between elements of the service provider's facility to control communication and computation processes. Those of skill in the art recognize that bus 1750 provides a communication path between the various elements of embodiment 1700 and that other point-to-point interconnection options (e.g. non-bus architecture) are also feasible. User interface and display 1710 is driven by interface circuit 1715.

Any or all of the functionality included in the service provider processor(s) may be embodied as application specific integrated circuits (ASICs), field programmable gate arrays (FPGAs), reduced instruction set computers (RISCs) or any other equivalent separate type of co-processor integrated into processor(s) 1720.

Memory 1745 can act as a repository for memory related to any of the methods that incorporate the functionality of the service provider's facility. Memory 1745 can provide the repository for storage of information such as program memory, downloads, uploads, or scratchpad calculations as well as the storage of streamed or downloaded content including audio, video and multimedia content. Those of skill in the art will recognize that memory 1745 may be incorporated all or in part of processor 1720. Communication interface 1725 has both receiver and transmitter elements for communication as known to those of skill in the art. Program instructions for operation of the processor(s) of the service provider's facility may be in memory 1745 or may be in processor(s) 1720.

Additionally, the service provider's facility includes a billing function 1755 to perform billing for the service provided to subscribers. The billing function interfaces with the processor(s) 1720 and memory 1745 through bus 1750 or any other appropriate communications structure. Similarly, there is a service function 1760 which schedules service technicians to service subscribers and issues that subscribers are having with the equipment. Service function 1760 interfaces with the processor(s) 1720 and memory 1745 through bus 1750 or any other appropriate communications structure.

It is to be understood that the present invention may be implemented in various forms of hardware, software, firmware, special purpose processors, or a combination thereof. Special purpose processors may include application specific integrated circuits (ASICs), reduced instruction set computers (RISCs) and/or field programmable gate arrays (FPGAs). Preferably, the present invention is implemented as a combination of hardware and software. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

It is to be further understood that, because some of the constituent system components and method steps depicted in the accompanying figures are preferably implemented in software, the actual connections between the system components (or the process steps) may differ depending upon the manner in which the present invention is programmed. Given the teachings herein, one of ordinary skill in the related art will be able to contemplate these and similar implementations or configurations of the present invention.

## Claims

1. A method in a receiving device, said method comprising:
monitoring (1205) and collecting radio frequency signal parameters over time;
transmitting (1210) said collected radio frequency signal parameters to a cloud service; and
receiving (1215) a predicted failure notification based on the collected radio frequency signal parameters from a service provider.

2. The method according to claim 1, further comprising forwarding (1220) said received predicted failure notification to a display device.

3. The method according to claim 1 or 2, wherein said transmitting is performed periodically or as a result of being polled by said cloud service.

4. The method according to any of claims 1 to 3, wherein said radio frequency signal parameters include any one or more of bit error rate, received signal strength indication, signal-to-noise ratio, channel frequency, phase locked loop, and voltage.

5. A receiving device comprising one or more processors operable to:
monitor (1205) and collect radio frequency signal parameters over time;
transmit (1210) said collected radio frequency signal parameters to a cloud service; and
receive (1215) a predicted failure notification based on the collected radio frequency signal parameters from a service provider.

6. The receiving device according to claim 5, wherein said one or more processors are further operable to forward (1220) said received predicted failure notification to a display device.

7. The receiving device box according to claim 5 or 6, wherein said transmitting is performed periodically or as a result of being polled by said cloud service.

8. The receiving device according to any of claims 5 to 7, wherein said radio frequency signal parameters include any one or more of bit error rate, received signal strength indication, signal-to-noise ratio, channel frequency, phase locked loop, and voltage.

9. A method in a cloud service, said method comprising:
receiving (1305) aggregated RF signal parameters collected over a period of time;
performing (1310) statistical analysis using said aggregated RF signal parameters collected over said period of time;
comparing (1315) results of said statistical analysis with given failure model built on performance measures;
generating (1320) failure prediction and a time window of failure occurrence based on the comparison; and
forwarding (1325) said generated failure prediction and said time window of failure occurrence to a service provider.

10. The method according to claim 9, further comprising receiving (1305) weather information and performing (1310) said statistical analysis also using said weather information.

11. The method according to claim 9 or 10, wherein said receiving is accomplished by polling a subscriber's receiving device.

12. A method in a service provider, said method comprising:
receiving (1405) a predicted failure type and a time window associated with said predicted failure;
forwarding (1410) the predicted failure type and associated time window as a notification to a subscriber; and
forwarding (1415) the predicted failure type and associated time window to a schedule service.

13. A cloud service comprising one or more processors operable to: perform (1310) statistical analysis using said log files of RF signal parameters collected over a period of time;
compare (1315) results of said statistical analysis with given failure model built on performance measures;
generate (1320) failure prediction and a time window of failure occurrence; and forward (1325) said generated failure prediction and said time window of failure occurrence to said service provider.

14. The cloud service according to claim 13, wherein said one or more processors are further operable to receive (1305) weather information and performing (1310) said statistical analysis also using said weather information.

15. A service provider comprising one or more processors operable to:
receive (1405) a predicted failure type and a time window associated with said predicted failure;
forward (1410) the predicted failure type and associated time window as a notification to the subscriber; and
forward (1415) the predicted failure type and associated time window to a schedule service.
